# EUROPÄISCHE PATENTSCHRIFT

(11) **EP 0 484 678 B1**
(45) Veröffentlichungstag und Bekanntmachung des Hinweises auf die Patenterteilung: **23.11.1994**
(21) Anmeldenummer: 91117011.6
(22) Anmeldetag: 05.10.1991
(51) Int. Cl.: H05B 41/26, H03K 11/00, H02M 7/44

(54) **Verfahren zum Betrieb einer wechselrichtergesteuerten Brückenschaltung und Brückenschaltung zur Durchführung des Verfahrens**
Bridge circuit and method for operating an inverter controlled bridge circuit
Procédé pour le fonctionnement d'un circuit à pont commandé par ondulateur et circuit à pont pour réaliser le procédé

(30) Priorität: 11.10.1990 AT 2053/90
(43) Veröffentlichungstag der Anmeldung: 13.05.1992
(73) Patentinhaber: Hermann, Hans, A-6890 Lustenau (AT)
(72) Erfinder: Hermann, Hans, A-6890 Lustenau (AT)
(74) Vertreter: Hefel, Herbert, Dipl.-Ing.

(56) Entgegenhaltungen:
- AT-B- 375 499
- AT-B- 380 373
- AT-B- 392 383
- DE-A- 3 401 653
- DE-A- 3 621 433

## Beschreibung

Die Erfindung bezieht sich auf ein Verfahren zum Betrieb einer wechselrichtergesteuerten Brückenschaltung für Pulsbreitenmodulation, insbesondere Zur Regelung eines im Diagonalzweig der Brückenschaltung über einen induktiven Übertrager angeschlossenen Verbrauchers, beispielsweise eine Halogenlampe, wobei in den Brückenzweigen vom Wechselrichter gesteuerte elektronische Schalter (Transistoren) vorgesehen sind, welche paarweise in wechselnder Folge geöffnet bzw. geschlossen werden und auf eine Brückenschaltung zur Durchführung des Verfahrens.

Bei solchen Brückenschaltungen müssen die potentialmäßig gesehen oben liegenden elektronischen Schalter isoliert angesteuert werden, da sie nicht auf einem festen, vorgegebenen Potential liegen. Das setzt voraus, daß jedem dieser beiden elektronischen Schalter ein gesonderter induktiver Übertrager vorgeschaltet ist. Bei einer Pulsbreitenmodulation ist dadurch ohne besondere Maßnahmen, die aufwendig sind und eine erhöhte Steuerleistung zur Folge haben, die minimale Pulsdauer beschränkt. Das Einschalt- bzw. Ausschaltsignal für die elektronischen Schalter muß ja über den induktiven Übertrager laufen und bei geringer Pulsdauer ist die Form dieses Signales für den induktiven Übertrager äußerst ungünstig, denn je kleiner die Einschaltdauer wird, umso höher wird aufgrund der induktiven Kopplung das Ausgangssignal, gegen welches der elektronische Schalter jedoch geschützt werden muß. Entweder wird daher das Eingangssignal für den induktiven Übertrager beschränkt mit der Folge, daß nur in beschränktem Umfang eine Regelung möglich ist, oder es werden zusätzliche Schaltglieder wie beispielsweise Zenerdioden und Widerstände vorgesehen, die jedoch zusätzliche Verluste und erhöhten Schaltungsaufwand bedingen.

Wechselrichter werden von verschiedenen Erzeugern in Form von integrierten Schaltungen auf dem Markt angeboten, und zwar auch zusammen mit Pulsbreitenreglern, die als Zusatzteil eines Wechselrichters, ebenfalls in Form von integrierten Schaltungen im Handel erhältlich sind. Solche Wechselrichterschaltungen sind beispielsweise beschrieben in den österreichischen Patentschriften 375 499, 380 373 und 392 383 im Zusammenhang mit dem Betrieb von Gasentladungslampen.

Von diesem Stand der Technik geht die Erfindung nun aus und sie zielt darauf ab, das Verfahren zum Betrieb einer wechselrichtergesteuerten Brückenschaltung dahingehend zu verbessern, daß diese geschilderten Nachteile nicht mehr auftreten, bzw. daß zusätzliche Schaltglieder nicht eingesetzt werden müssen, was erfindungsgemäß dadurch gelingt, daß von den beiden, jeweils paarweise aktivierten elektronischen Schaltern die einen mit einem Tastverhältnis von knapp 50 % betrieben werden und die anderen elektronischen Schalter für die Pulsbreitenmodulation verwendet werden. Da die paarweise aktivierten Schalter einer solchen Brückenschaltung in Serie liegen, kann immer einer der Schalter eingeschaltet bleiben, so daß die durch die kurzen Impulse bedingten Spannungsüberhöhungen am Ausgang der induktiven Übertrager nicht mehr auftreten. Eine Brückenschaltung der erfindungsgemäßen Art ist dadurch gekennzeichnet, daß die mit einem Tastverhältnis von knapp 50 % betriebenen beiden elektronischen Schalter an einem einzigen induktiven Übertrager angeschlossen sind und dieser Übertrager zwei symmetrisch angeordnete, gegeneinander gepolte Sekundärwicklungen aufweist und an jeder der beiden Sekundärwicklungen einer der beiden mit einem Tastverhältnis von knapp 50 % betriebenen elektronischen Schalter angeschlossen ist.

Mußten bislang stets zwei induktive Übertrager vorgesehen sein, für jeden Schalter einen, so kann nun mit einem einzigen induktiven Übertrager für beide Schalter das Auslangen gefunden werden. Dieser Übertrager besitzt zwei Sekundärwicklungen, an welchen die Schalter jeweils angeschlossen sind, wobei diese Sekundärwicklungen gegeneinandergepolt sind und bezüglich der Primärwicklung symmetrisch angeordnet sind, um auf diese Weise Querströme über die elektronischen Schalter zu vermeiden. Die Primärwicklung dieses einzigen Übertragers wird dabei mit einem Tastverhältnis von knapp 50 % über den Wechselrichter angesteuert.

Zur Veranschaulichung der Erfindung wird diese anhand der Zeichnung näher beschrieben. Es zeigen:
- Fig. 1: eine herkömmliche Schaltung,
- Fig. 2: eine Schaltung gemäß der Erfindung,
- Fig. 3: ein Diagramm.

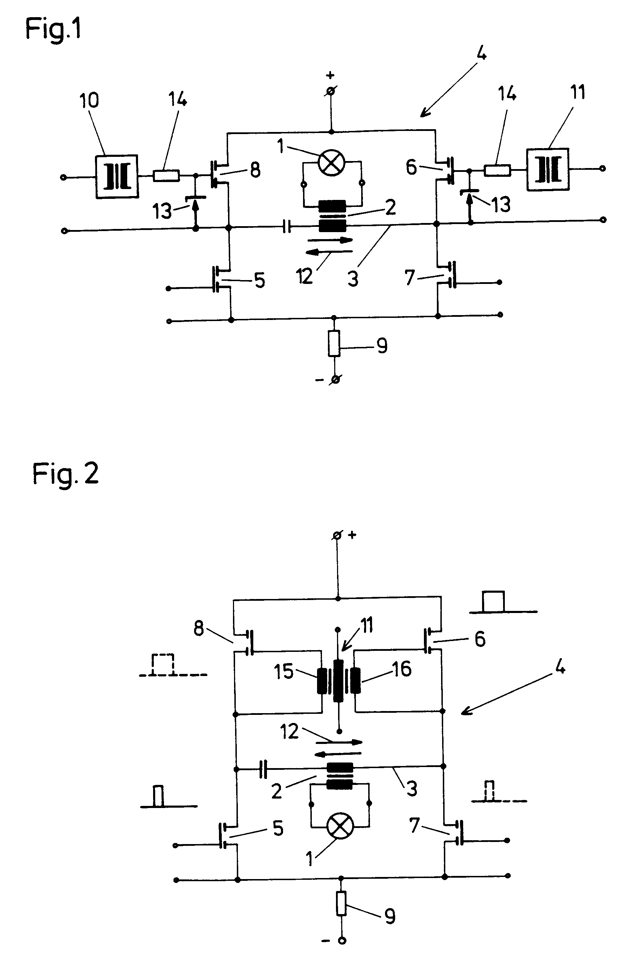

Fig. 1 zeigt eine bekannte wechselrichtergesteuerte Brückenschaltung für Pulsbreitenmodulation für den Betrieb einer Halogenlampe 1, welche über einen induktiven Übertrager 2 im Diagonalzweig 3 einer gleichstromgespeisten und von einem Wechselrichter gesteuerten Brückenschaltung 4 versorgt wird, in deren vier Brückenzweigen elektronische Schalter (Transistoren) 5, 6, 7, 8 angeordnet sind, die von dem hier nicht näher gezeigten Wechselrichter angesteuert werden. Ein Schutzwiderstand 9 erfaßt den Ist-Wert des Stromes. Er hat die Aufgabe, falls der Strom über die Brücke einen zulässigen Wert überschreitet, die Brücke von der Stromversorgung zu trennen. Dieser Schutzwiderstand kann auch in den Schaltern z. B. in Feldeffekttransistoren mit eingebauter Strommessung direkt eingebaut sein, was eine weitere Verringerung der Verlustleistung bewirkt. Die in dieser Brückenschaltung "oben" liegenden elektronischen Schalter 6, 8 müssen isoliert angeordnet und isoliert angesteuert werden, da sie auf keinem festen Potential liegen, aus welchem Grund ihnen induktive Übertrager 9, 10 vorgeschaltet sein müssen. Die Schaltung wird so betrieben, daß die elektronischen Schalter, die in der Brücke diagonal zueinander in den Zweigen dieser Brücke liegen, also die Schalter 5, 6 bzw. 7, 8 paarweise aktiviert werden, sie werden wechselweise geöffnet und geschlossen, so daß der Strom im Diagonalzweig 3 der Brücke wechselweise (Fig. 1) einmal von rechts nach links und einmal von links nach rechts fließt, was durch die beiden Pfeile 12 angedeutet ist. Im normalen Betrieb der Brückenschaltung beträgt das Tastverhältnis der elektronischen Schalter (Transistoren) 5, 6, 7, 8 - 50 %. Soll der Verbraucher, hier die Halogenlampe 1, hinsichtlich ihrer Helligkeit geregelt werden, so wird unter Beibehaltung der Steuerfrequenz die Impulsdauer, also die Einschaltdauer verkürzt. Infolge der induktiven Kopplung der Schalter 6, 8 erzeugen die kurzen Impulse an der Eingangsseite der Übertrager 10, 11 hohe Spannungsimpulse an der Ausgangsseite, welche die elektronischen Schalter 6, 8 gefährden können, so daß zu deren Schutz besondere Schaltmaßnahmen vorgesehen werden müssen, wie in Fig. 1 veranschaulicht, es müssen z. B. Zenerdioden 13 zugeschaltet werden und/oder Schutzwiderstände 14, oder aber es wird das Eingangssignal zu den Übertragern 10, 11 beschränkt, was jedoch die Regelungsmöglichkeit beeinträchtigt.

Die erfindungsgemäße Schaltung veranschaulicht nun Fig. 2. Aus dieser Schaltung, in der gleiche Teile wie in Fig. 1 mit denselben Hinweisziffern ausgestattet worden sind, ist ersichtlich, daß den beiden "oben" liegenden Schaltern (Transistoren) 6, 8 ein gemeinsamer induktiver Übertrager 11 zugeordnet ist, welcher zwei Sekundärwicklungen 15, 16 besitzt, wobei an jeder dieser Sekundärwicklung einer der beiden "oberen" Schalter 6, 8 angeschlossen ist. Die den elektronischen Schaltern (Transistoren) 5, 6, 7, 8 in der Fig. 2 zugeordneten Impulsdiagramme zeigen ferner, daß die "oberen" elektronischen Schalter 6, 8 mit einem Tastverhältnis von knapp 50 % betrieben werden, wogegen die Pulsbreitenmodulation den in der Brücke "unteren" elektronischen Schaltern 5, 7 zugeordnet ist. Dadurch tritt das oben in Zusammenhang mit dem Stand der Technik geschilderte Problem nichtmehr auf. Da die Schalter ja in solchen Brückenschalter paarweise 5-6; 7-8 jeweils in Serie geschaltet sind, ist diese Betriebsweise durchaus möglich. Der Übertrager 11 ist so auszulegen, daß die Kopplung zwischen den primären und den beiden sekundären Wicklungen exakt gleich groß ist, widrigenfalls Querströme über die elektronischen Schalter fließen.

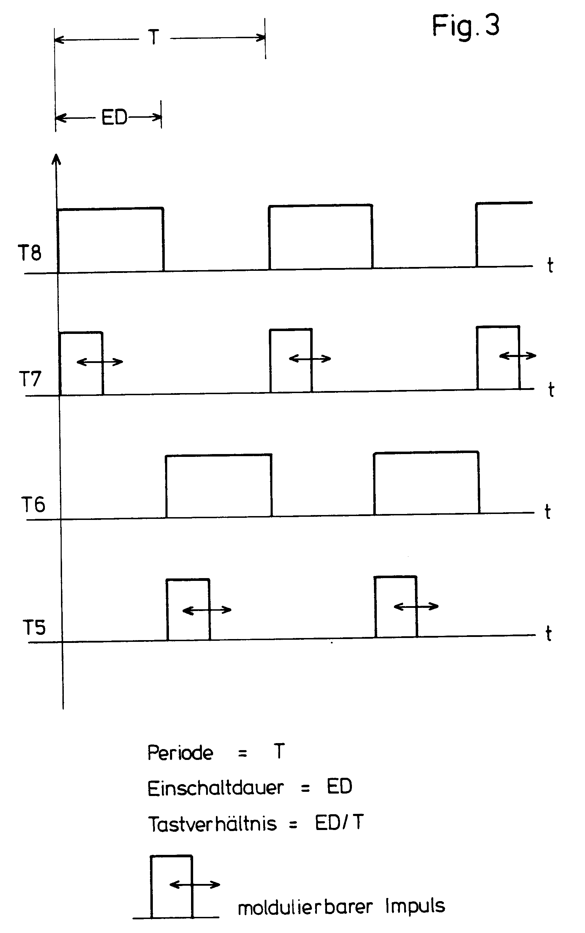

Das angegebene Tastverhältnis ist bezogen auf die Periodendauer des die Brückschaltung speisenden Wechselrichters, die beispielsweise 20 kHz oder mehr betragen kann. Der Ausdruck "Tastverhältnis" gibt das Verhältnis der Einschaltdauer zur Periodendauer an. Dieser Begriff findet sich in diesem Sinne auch in der einschlägigen Literatur ("Halbleiter-Schaltungstechnik" - Tietze-Schenk; "Elemente der angewandten Elektronik" - E. Böhmer; "Schaltnetzteile in der Praxis" - O. Kilgenstein). Zur Veranschaulichung der Erfindung dient das vereinfachte Diagramm nach Fig. 3, das grafisch die obige Aussage veranschaulicht. Die im Diagramm links angegebenen Bezeichnungen "Tn" bezeichnen die Transistoren der Brückenschaltung nach Fig. 2. Die Einschaltdauer der Transistoren T8 und T6 entsprechen etwa der halben Periodendauer T. Die Periodendauer ist vorgegeben durch den verwendeten Wechselrichter, der die Brückenschaltung speist. Solche Wechselrichter werden von verschiedenen Erzeugern in Form von intregrierten Schaltungen auf dem Markt angeboten, und zwar auch zusammen mit Pulsbreitenreglern, die als Zusatzteil eines Wechselrichters, ebenfalls in Form von integrierten Schaltungen im Handel erhältlich sind. Die Einschaltdauer der Transistoren T5 und T7 wird zu Regelzwecken verändert. Der im Diagramm eingezeichnete Pfeil deutet an, daß die Breite des Impulses veränderbar ist (Pulsbreitenmodulation).

Die erfindungsgemäße Maßnahme ist jedoch auch für andere Verbraucher einsetzbar, beispielsweise für Batterieladegeräte oder für Netzgeräte für Computer.

Dank des erfindungsgemäßen Vorschlages wird eine Schaltung der eingangs genannnten Art nicht nur hinsichtlich ihres Aufwandes vereinfacht, trotz dieses vereinfachten Aufwandes ist sie in vollem Ausmaß regelbar, und sie benötigt auch eine geringere Steuerleistung.

## Patentansprüche

1. Verfahren zum Betrieb einer wechselrichtergesteuerten Brückenschaltung (4) für Pulsbreitenmodulation, insbesondere zur Regelung eines im Diagonalzweig (3) der Brückenschaltung (4) über einen induktiven Übertrager (2) angeschlossenen Verbrauchers (1), beispielsweise eine Halogenlampe, wobei in den Brückenzweigen vom Wechselrichter gesteuerte elektronische Schalter (5-8) z.B. Transistoren vor- gesehen sind, welche paarweise in wechselnder Folge geöffnet bzw. geschlossen werden, dadurch gekennzeichnet, daß von den beiden, jeweils paarweise aktivierten elektronischen Schaltern (5, 6; 7, 8) die einen (6; 8) mit einem Tastverhältnis von knapp 50 % betrieben werden und die anderen elektronischen Schalter (5; 7) für die Pulsbreitenmodulation verwendet werden.

2. Brückenschaltung zur Durchführung des Verfahrens nach Anspruch 1, dadurch gekennzeichnet, daß die mit einem Tastverhältnis von knapp 50 % betriebenen beiden elektronischen Schalter (6; 8) an einem einzigen induktiven Übertrager (14) angeschlossen sind und dieser Übertrager (14) zwei symmetrisch angeordnete, gegeneinander gepolte Sekundärwicklungen (15, 16) aufweist und an jeder der beiden Sekundärwicklungen einer der beiden mit einem Tastverhältnis von knapp 50 % betriebenen elektronischen Schalter (6; 8) angeschlossen ist.

## Claims

1. A process for the operation of an inverter-controlled bridge circuit (4) for pulse duration modulation, in particular for the control of a load (1), for example a halogen lamp, which load is connected in the diagonal arm (3) of the bridge circuit (4) via an inductive transformer (2), there being provided in the bridge arms electronic switches (5-8), for example transistors, which are controlled by the inverter and are opened and closed alternately in pairs, characterised in that, of the two electronic switches (5, 6; 7, 8) each activated in pairs, one set (6; 8) is operated with a pulse duty factor of just under 50% and the other electronic switches (5; 7) are used for pulse duration modulation.

2. A bridge circuit for the implementation of the process as claimed in Claim 1, characterised in that the two electronic switches (6; 8) operated with a pulse duty factor of just under 50% are connected to a single inductive transformer (14), in that this transformer (14) has two symmetrically positioned, oppositely poled secondary windings (15, 16), and in that one of the two electronic switches (6; 8) operated with a pulse duty factor of just under 50% is connected to each of the two secondary windings.

## Revendications

1. Procédé de mise en service d'un circuit à pont (4) commandé par onduleur pour moduler en largeur des impulsions, en particulier pour la régulation d'un récepteur (1) branché dans la dérivation diagonale (3) du circuit à pont (4) via un translateur inductif (2), par exemple une lampe à halogène, procédé dans lequel il est prévu dans les dérivations du pont des commutateurs électroniques (5-8) commandés par l'onduleur, par exemple, des transistors, qui sont ouverts ou fermés par paires en alternance, caractérisé en ce que, parmi les deux commutateurs électroniques (5, 6; 7, 8) activés respectivement par paires, les premiers (6; 8) sont mis en service avec un taux d'impulsions d'à peine 50 %, tandis que les autres commutateurs électroniques (5; 7) sont utilisés pour la modulation en largeur des impulsions.

2. Circuit à pont permettant de réaliser le procédé selon la revendication 1, caractérisé en ce que les deux commutateurs électroniques (6; 8) mis en service avec un taux d'impulsion d'à peine 50 % sont raccordés à un seul translateur inductif (14), ledit translateur (14) présente deux enroulements secondaires (15, 16) à pôles opposés agencés de manière symétrique et l'un des deux commutateurs électroniques (6; 8) mis en service avec un rapport d'impulsion d'à peine 50 % est connecté à chacun des deux enroulements secondaires.
